# EUROPEAN PATENT APPLICATION

(11) **EP 4 528 154 A1**
(43) Date of publication of application: **26.03.2025**
(21) Application number: 23834740.5
(22) Date of filing: 30.06.2023
(51) Int. Cl.: F21V 17/16

(54) **ATMOSPHERE LAMP**

(30) Priority: 04.07.2022 CN 202210777701
(71) Applicant: Fuyao Glass Industry Group Co., Ltd., Fuqing, Fujian 350300 (CN)
(72) Inventor: GUO, Jinfeng, Fuqing, Fujian 350300 (CN); YE, Yunxiang, Fuqing, Fujian 350300 (CN); WANG, Zhixin, Fuqing, Fujian 350300 (CN); ZHANG, Suming, Fuqing, Fujian 350300 (CN); LAN, Hong, Fuqing, Fujian 350300 (CN)
(74) Representative: Patentanwälte Olbricht Buchhold Keulertz
(86) International application number: PCT/CN2023/104349
(87) International publication number: WO 2024/007973

(57) **Abstract**

The present disclosure discloses an atmosphere lamp, including: at least one main circuit board (1); at least one auxiliary circuit board (2) mounted on and electrically connected to the main circuit board (1), the auxiliary circuit board (2) being provided with at least one light source structure (23); and at least one light guide block (3) provided with at least one snapping groove (4), the light guide block (3) being snapped onto the auxiliary circuit board (2) by the snapping groove (4), and the light guide block (3) being provided with at least one light incident surface (31) disposed opposite to the light source structure (23). **In** the atmosphere lamp of the present disclosure, at least one snapping groove (4) matched with the auxiliary circuit board (2) is formed in the light guide block (3), so that the light guide block (3) can be directly snapped onto the auxiliary circuit board (2), and the light incident surface (31) of the light guide block (3) can be corresponding to the light source structure (23) on the auxiliary circuit board (2), thereby utilizing the light guide block (3) to guide light rays generated by the light source structure (23) to be emitted along a specific path. The atmosphere lamp is simple in structure, does not need other tools for snapping and positioning, and also does not need machining a rivet stud on the light guide block (3) and forming a hole in the auxiliary circuit board (2) for hot riveting, thereby achieving high assembling efficiency and low cost.

## Description

### RELATED APPLICATION

The present disclosure claims priority to Chinese Invention Patent Application No. 202210777701.0, entitled "atmosphere lamp" and filed on July 4, 2022.

### TECHNICAL FIELD

The present disclosure relates to the technical field of light emitting devices, and particularly to an atmosphere lamp.

### BACKGROUND

The atmosphere lamp is a light emitting device that uses a light source combined with a circuit board to control the changes of different brightnesses, gray scales and colors. The atmosphere lamp can be mounted on various occasions, such as vehicles and buildings, and has a wide application range. The light rays generated by the light source on the circuit board are guided to be emitted in a specific direction through a light guide block.

At present, when the atmosphere lamp is assembled, the light guide block is mounted on the circuit board by means of hot-riveting, that is, a rivet stud is disposed on the light guide block, a mounting hole is formed in the circuit board, and an end of the rivet stud passes through the mounting hole and is heated to form a rivet head, so that the light guide block is fixed on the circuit board. As such, a corresponding hot-riveting tool needs to be separately disposed and matched with a hot-riveting device, resulting in high cost, complicated procedures, and low assembly efficiency.

### SUMMARY

The present disclosure aims to provide an atmosphere lamp, so as to solve the technical problems of high cost, complicated procedures and low assembly efficiency that are caused by the fact that a light guide block needs to be mounted on a circuit board by means of hot-riveting when the atmosphere lamp is assembled.

The above object of the present disclosure can be achieved using the following technical solutions:
The present disclosure provides an atmosphere lamp, comprising: at least one main circuit board; at least one auxiliary circuit board mounted on and electrically connected to the main circuit board, the auxiliary circuit board being provided with at least one light source structure; and at least one light guide block provided with at least one snapping groove, the light guide block being snapped onto the auxiliary circuit board by means of the snapping groove, and the light guide block being provided with at least one light incident surface disposed opposite to the light source structure.

The present disclosure has the following characteristics and advantages:
In the atmosphere lamp of the present disclosure, at least one snapping groove matched with the auxiliary circuit board is formed in the light guide block, so that the light guide block can be directly snapped onto the auxiliary circuit board, and the light incident surface of the light guide block can be corresponding to the light source structure on the auxiliary circuit board, thereby utilizing the light guide block to guide light rays generated by the light source structure to be emitted according to a specific path. The atmosphere lamp has a simple structure, does not need other tools for snapping and positioning, and also does not need machining a rivet stud on the light guide block and forming a hole in the auxiliary circuit board to perform hot-riveting, thereby achieving a high assembling efficiency and a low cost.

### BRIEF DESCRIPTION OF DRAWINGS

For a clearer illustration of technical features in the embodiments of the present disclosure, a brief description of the drawings for the embodiments will be given below. The drawings described below involve only some embodiments of this disclosure. For those of ordinary skill in the art, other drawings can be derived from these drawings without any inventive efforts.
FIG. 1 is a diagram of a stereoscopic structure of an atmosphere lamp according to an embodiment.
FIG. 2 is a diagram of a stereoscopic structure of an atmosphere lamp from another perspective according to an embodiment.
FIG. 3 is a schematic diagram of a side-viewing structure of an atmosphere lamp according to an embodiment.
FIG. 4 is a structurally schematic diagram of a light guide block according to an embodiment.
FIG. 5 is a schematic diagram of a bottom view of a light guide block according to an embodiment.
FIG. 6 is a structurally schematic diagram of a main circuit board and an auxiliary circuit board according to an embodiment.
FIG. 7 is a schematic diagram of a stereoscopic structure of an atmosphere lamp according to another embodiment.
FIG. 8 is diagram of a stereoscopic structure of an atmosphere lamp from another perspective according to another embodiment.
FIG. 9 is a structurally schematic diagram of a light guide block according to another embodiment.
FIG. 10 is a structurally schematic diagram of a main circuit board and an auxiliary circuit board according to another embodiment.

In the drawings,
1: main circuit board; 11: mounting groove; 2: auxiliary circuit board; 21: mounting block; 22: welding pin; 23: light source structure; 24: first groove; 25: second groove; 26: third groove; 27: fourth groove; 3: light guide block; 31: light incident surface; 4: snapping groove; 41: claw; 42: first bump; 5: transverse limiting structure; 51: transverse limiting groove; 52: transverse limiting block; 53: connecting plate; 6: longitudinal limiting structure; 61: longitudinal limiting groove; 62: longitudinal limiting block; 621: guide slope; 622: limiting slope; 7: support structure; 71: second bump; 8: connector.

### DETAILED DESCRIPTION OF EMBODIMENTS

A clear and complete description of the embodiments of the present disclosure will be set forth with reference to the drawings. The described embodiments are only a part, rather than all, of the embodiments of the present disclosure. All other embodiments derived by persons skilled in the art from the embodiments of the present disclosure without making inventive efforts shall fall within the scope of the present disclosure.

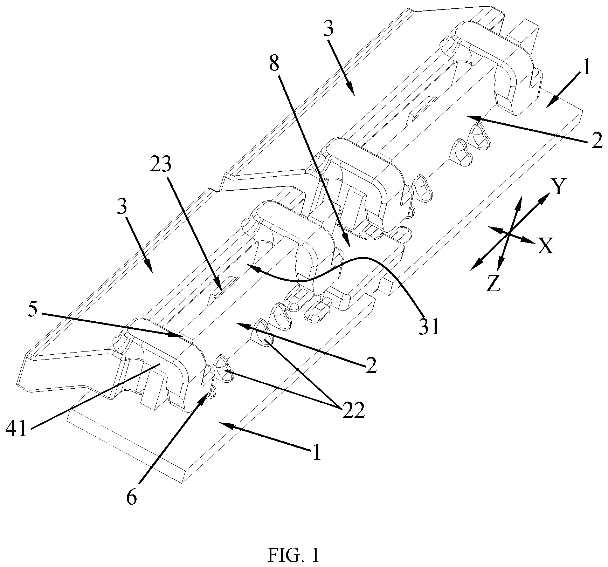

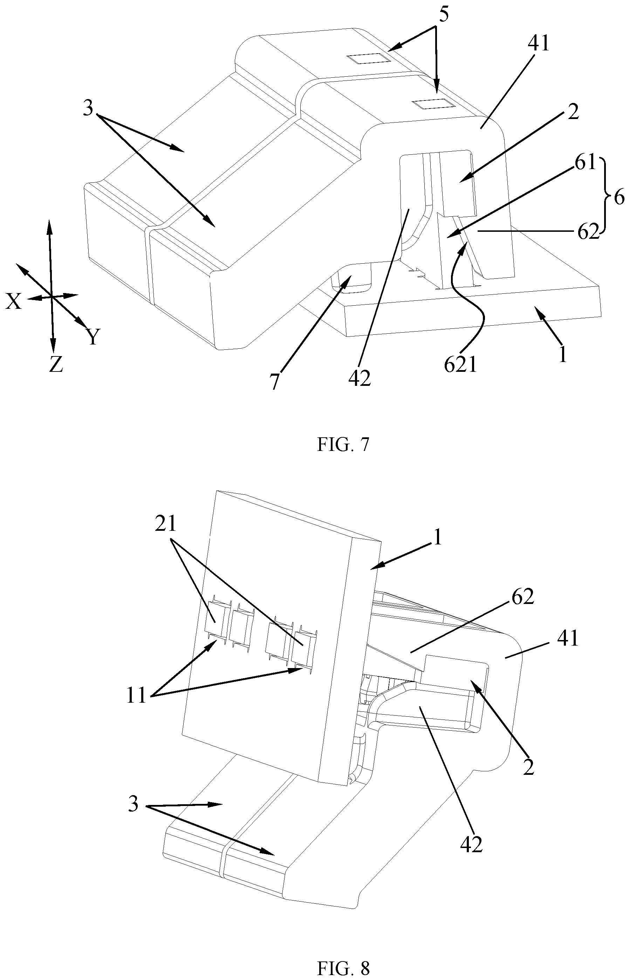

As illustrated in FIGS. 1 and 7, the present disclosure provides an atmosphere lamp, which includes at least one main circuit board 1, at least one auxiliary circuit board 2 mounted on and electrically connected to the main circuit board 1, and at least one light guide block 3 provided with at least one snapping groove 4. The auxiliary circuit board 2 is provided with at least one light source structure 23. The light guide block 3 is snapped onto the auxiliary circuit board 2 through the snapping groove 4. The light guide block 3 is provided with at least one light incident surface 31 disposed opposite to the light source structure 23. For the convenience of describing the positional relationships between various structures, description will be made with reference to directions illustrated in FIGS. 1 and 7, with the height direction being a direction Z, the length direction being a direction Y, and the width direction being a direction X.

In the atmosphere lamp of the present disclosure, the light guide block 3 is provided with at least one snapping groove 4 matched with the auxiliary circuit board 2, so that the light guide block 3 can be directly snapped onto the auxiliary circuit board 2, with the light incident surface 31 of the light guide block 3 being corresponding to the light source structure 23 on the auxiliary circuit board 2, thereby utilizing the light guide block 3 to guide light rays generated by the light source structure 23 to be emitted along a specific path. The atmosphere lamp is simple in structure, does not need other tools for snapping and positioning, and also does not need machining a rivet stud on the light guide block 3 and forming a hole in the auxiliary circuit board 2 for hot riveting, thereby achieving high assembling efficiency and low cost.

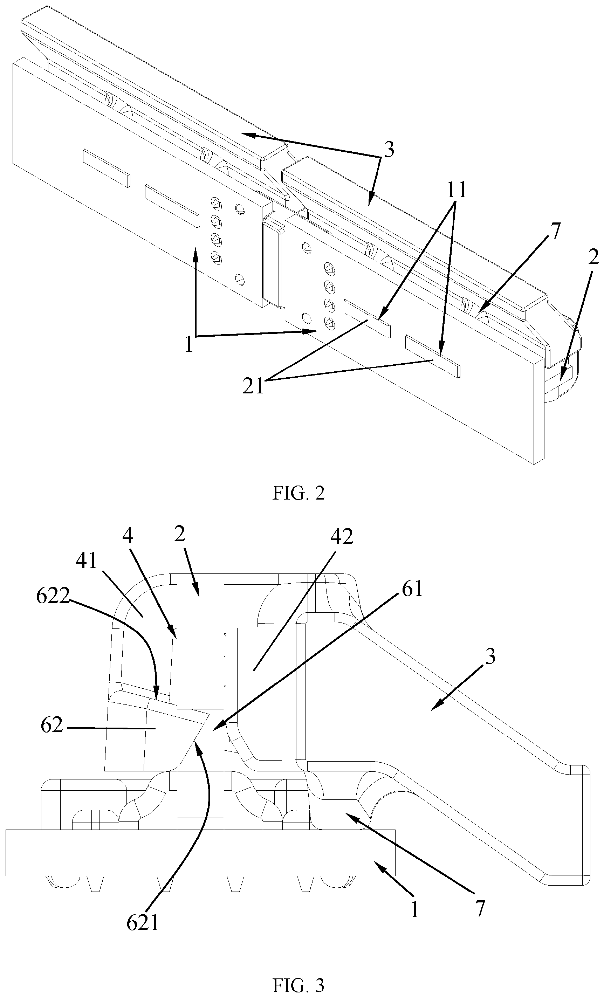

Specifically, a width of the snapping groove 4 is slightly smaller than a thickness of the auxiliary circuit board 2. The light source structure 23 includes a plurality of LED particles. The light guide block 3 receives, through a light incident surface 31 thereof, light rays generated by the plurality of LED particles, and the light rays are diffusely reflected by the light guide block 3 and then transferred to the glass of the atmosphere lamp or any other light-transmitting part along a specific path. As illustrated in FIGS. 2 and 8, the main circuit board 1 is provided with a mounting groove 11, the auxiliary circuit board 2 is provided with a mounting block 21 inserted into the mounting groove 11, and the auxiliary circuit board 2 is welded to and fixed on the main circuit board 1 through a plurality of welding pins 22 and is electrically connected to the main circuit board 1. Either of the main circuit board 1 and auxiliary circuit board 2 is a PCBA board.

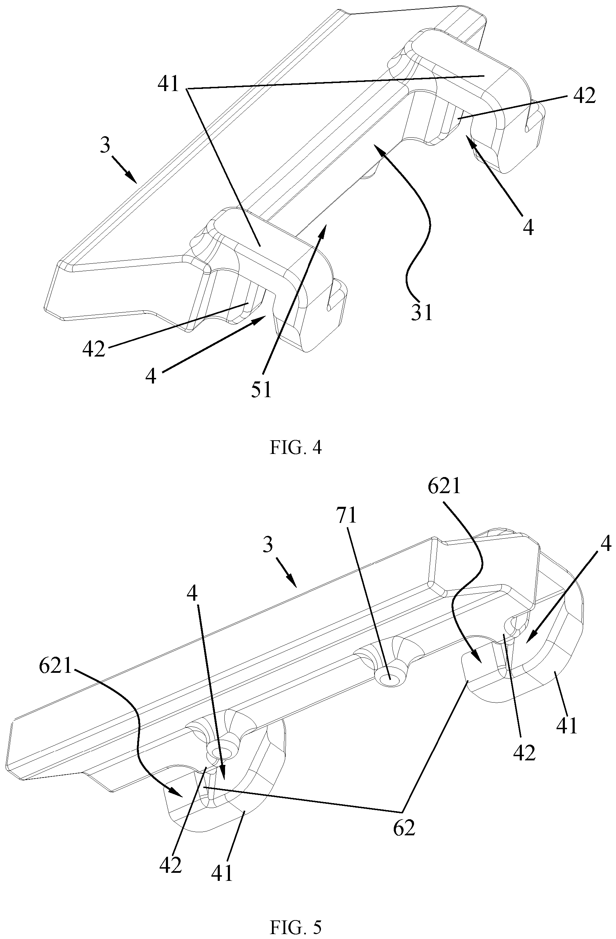

As illustrated in FIGS. 4, 5 and 9, in the embodiment of the present disclosure, the light guide block 3 is provided with at least one claw 41 and at least one first bump 42, the first bump 42 and the light incident surface 31 are located on the same side of the light guide block 3, and the claw 41 and the first bump 42 are cooperated to form the snapping groove 4. By disposing the first bump 42, a space for mounting the light source structure 23 is available between the light incident surface 31 and the auxiliary circuit board 2. By forming the snapping groove 4 through the cooperation between the first bump 42 and the claw 41, the light guide block 3 is ensured to be snapped and fixed on the auxiliary circuit board 2, and the light guide block 3 and the auxiliary circuit board 2 do not move relative to each other in a width direction of the snapping groove 4, i.e., a width direction X of the auxiliary circuit board 2 and the light guide block 3.

Specifically, the claw 41, the first bump 42, and the light guide block 3 are integrally formed for easy processing. The light guide block 3 is provided with a light incident side surface opposite to the auxiliary circuit board 2, and a top surface away from the main circuit board 1 and connected to the side surface. Both the light incident surface 31 and the first bump 42 are located on the light incident side surface of the light guide block 3. A fixed end of the claw 41 is connected to the top surface of the light guide block 3. The claw 41 is substantially L-shaped.

As illustrated in FIGS. 1 and 7, in the embodiments of the present disclosure, a transverse limiting structure 5 is disposed between the light guide block 3 and the auxiliary circuit board 2 to limit a relative movement between the light guide block 3 and the auxiliary circuit board 2 in a length direction of the snapping groove 4, which is an axial direction of the snapping groove 4 and is also a length direction Y of the auxiliary circuit board 2 and the light guide block 3. By disposing the transverse limiting structure 5, it is ensured that the light guide block 3 and the auxiliary circuit board 2 do not move relative to each other in the length direction of the snapping groove 4.

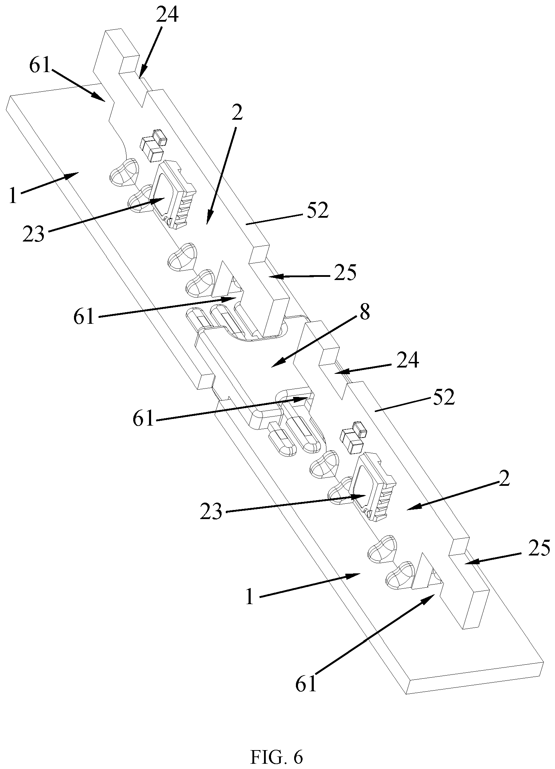

As illustrated in FIGS. 1, 5, 6, 7, 9 and 10, the transverse limiting structure 5 includes a transverse limiting block 52 and a transverse limiting groove 51, and the transverse limiting block 52 is disposed on the auxiliary circuit board 2 and matched with the transverse limiting groove 51. The light guide block 3 includes a plurality of claws 41. The plurality of claws 41 and the plurality of first bumps 42 are cooperated to form a plurality of snapping grooves 4, and the light guide block 3 is snapped onto the auxiliary circuit board 2 through the plurality of snapping grooves 4, so that the light guide block 3 can be mounted more stably. Specifically, two claws 41 are disposed at an interval along the length direction of the auxiliary circuit board 2.

As illustrated in FIGS. 1, 5 and 6, in the embodiment, the transverse limiting groove 51 is formed between two adjacent claws 41, which is simple in structure and easy to process. Specifically, the top surface of the auxiliary circuit board 2 is cut to form a first groove 24 and a second groove 25, so that the transverse stop block 52 is formed between the first groove 24 and the second groove 25, and the two claws 41 are mounted in the first groove 24 and the second groove 25.

As illustrated in FIGS. 7, 9 and 10, in another embodiment, adjacent two of the claws 41 are connected through a connecting plate 53 in which the transverse limiting groove 51 is formed. The connection of the adjacent two of the claws 41 through the connecting plate 53 can also make the structure of the two claws 41 more stable. Specifically, the connecting plate 53 is connected to the top surface of the light guide block 3. The top surface of the auxiliary circuit board 2 is cut to form a third groove 26 and a fourth groove 27, so that the transverse limiting block 52 is formed between the third groove 26 and the fourth groove 27, and the two claws 41 are mounted in the third groove 26 and the fourth groove 27.

As illustrated in FIGS. 1, 5, 6, 7, 9 and 10, the light guide block 3 is an asymmetric structure with respect to a center of the transverse limiting groove 51. The auxiliary circuit board 2 is an asymmetric structure with respect to the center of the transverse limiting block 52. By disposing the light guide block 3 and the auxiliary circuit board 2 as asymmetric structures, when the light guide block 3 is mounted from a side of the auxiliary circuit board 2 where the light source structure 23 is not mounted, the light guide block 3 cannot be snapped onto the auxiliary circuit board 2 because the transverse limiting groove 51 on the light guide block 3 cannot be matched with the transverse limiting block 52 on the auxiliary circuit board 2, thereby avoiding the mounting error of the light guide block 3.

As illustrated in FIGS. 1, 5 and 6, in the embodiment, the first groove 24 is a stepped groove, and the second groove 25 is a three-sided open groove, so that the auxiliary circuit board 2 forms an asymmetric structure. The two claws 41 are disposed asymmetrically with respect to a center of the light guide block 3, so that the light guide block 3 forms an asymmetric structure.

As illustrated in FIGS. 7, 9 and 10, in another embodiment, the transverse limiting groove 51 is disposed close to one of the claws 41, so that the light guide block 3 forms an asymmetric structure. The third groove 26 and the fourth groove 27 are both stepped grooves, but an extension dimension of the third groove 26 in the length direction Y of the auxiliary circuit board 2 is greater than an extension dimension of the fourth groove 27 in the length direction Y of the auxiliary circuit board 2, so that the auxiliary circuit board 2 forms an asymmetric structure.

As illustrated in FIGS. 1 and 7, in the embodiment of the present disclosure, a longitudinal limiting structure 6 is disposed between the light guide block 3 and the auxiliary circuit board 2 to limit the auxiliary circuit board 2 from falling out of the snapping groove 4. By disposing the longitudinal limiting structure 6, the light guide block 3 and the auxiliary circuit board 2 cannot move relative to each other in the height direction Z after the light guide block 3 is downwards snapped onto the auxiliary circuit board 2, so that the auxiliary circuit board 2 will not fall out of the snapping groove 4.

As illustrated in FIGS. 1, 5, 6, 7, 9 and 10, the longitudinal limiting structure 6 includes a longitudinal limiting block 62 and a longitudinal limiting groove 61, the claw 41 has an inner side surface opposite to the auxiliary circuit board 2, the longitudinal limiting block 62 is disposed on the inner side surface of the claw 41, and the longitudinal limiting groove 61 is disposed on the auxiliary circuit board 2 and matched with the longitudinal limiting block 62. After the light guide block 3 and the auxiliary circuit board 2 are assembled in place, a downward movement of the light guide block 3 relative to the auxiliary circuit board 2 is restricted by a bottom surface of the snapping groove 4, and an upward movement of the light guide block 3 relative to the auxiliary circuit board 2 is restricted by the longitudinal limiting block 62. Specifically, the various grooves on the auxiliary circuit board 2 are formed by cutting edge portions of the auxiliary circuit board 2, without needing to form a hole or a groove in a middle portion of the auxiliary circuit board 2, which is easy to process and manufacture.

As illustrated in FIGS. 3, 5, 7 and 9, the longitudinal limiting block 62 is provided with a guide slope 621 which is inclined towards the outside of the snapping groove 4 along a mounting direction of the light guide block 3 (i.e., downward along the direction Z). When the light guide block 3 is downwards snapped onto the auxiliary circuit board 2, the auxiliary circuit board 2 is guided by the guide slope 621 to pass through the longitudinal limiting block 62 to be snapped into the snapping groove 4, so that the longitudinal limiting block 62 is snapped into the longitudinal limiting groove 61 on the auxiliary circuit board 2.

As illustrated in FIG. 3, in this embodiment, the longitudinal limiting block 62 is further provided with a limiting slope 622, which is inclined towards the inside of the longitudinal limiting groove 61 along a snapping direction of the longitudinal limiting block 62. The longitudinal limiting block 62 is snapped into the longitudinal limiting groove 61 along the thickness direction of the auxiliary circuit board 2. By disposing the limiting slope 622, an interference fit between the longitudinal limiting block 62 and the longitudinal limiting groove 61 can be ensured when there is a height difference between the longitudinal limiting blocks 62 and the longitudinal limiting blocks 62, so as to prevent the light guide block 3 from moving upwards.

As illustrated in FIGS. 3 and 7, in the embodiment of the present disclosure, a support structure 7 is disposed on the light guide block 3, and abuts against the main circuit board 1 along the mounting direction of the light guide block 3. Since the light guide block 3 is supported by the main circuit board 1, the mounting stability of the light guide block 3 is improved and the light guide block 3 is prevented from being turned over.

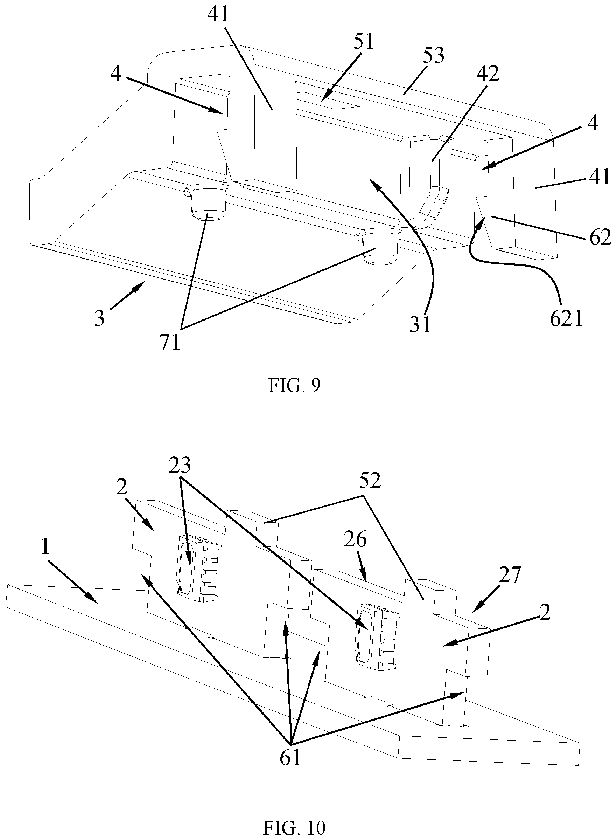

As illustrated in FIGS. 5 and 9, the support structure 7 includes a plurality of second bumps 71 disposed symmetrically with respect to the center of gravity of the light guide block 3. Specifically, the support structure 7 includes two second bumps 71 each being a substantially cylindrical structure. The second bumps 71 are integrally formed on a bottom surface of the light guide block 3 opposite to the main circuit board 1.

A layout angle between the auxiliary circuit board 2 and the main circuit board 1 is not particularly limited, and as illustrated in FIGS. 1 and 7, in the embodiment of the present disclosure, the auxiliary circuit board 2 has a first end and a second end opposite to each other, the first end of the auxiliary circuit board 2 is connected to the main circuit board 1 and disposed vertically, and the light guide block 3 is snapped onto the auxiliary circuit board 2 from the second end of the auxiliary circuit board 2 through the snapping groove 4, so that the auxiliary circuit board 2 can be more stably mounted on the main circuit board 1, and the auxiliary circuit board 2 is less likely to interfere with other electronic components on the main circuit board 1.

As illustrated in FIG. 1, in the embodiment, the atmosphere lamp includes a plurality of main circuit boards 1, a plurality of auxiliary circuit boards 2 and a plurality of light guide blocks 3; the plurality of main circuit boards 1 are connected and conducted through a connector 8, the plurality of auxiliary circuit boards 2 are mounted on the plurality of main circuit boards 1 in one-to-one correspondence, and the plurality of light guide blocks 3 are mounted on the plurality of auxiliary circuit boards 2 in one-to-one correspondence. By connecting the plurality of main circuit boards 1 through the connector 8 and disposing a plurality of light guide blocks 3, it is convenient to assemble the atmosphere lamp into a desired shape.

As illustrated in FIGS. 7 and 10, in another embodiment, the plurality of auxiliary circuit boards 2 are mounted on the same main circuit board 1. The plurality of light guide blocks 3 are mounted on the plurality of auxiliary circuit boards 2 in one-to-one correspondence.

Those described above are just several embodiments of the present disclosure, and those skilled in the art can make various modifications or variations to the embodiments of the present disclosure according to the contents disclosed in the application document without departing from the spirit and scope of the present disclosure.

## Claims

1. An atmosphere lamp, comprising:
at least one main circuit board;
at least one auxiliary circuit board mounted on and electrically connected to the main circuit board, the auxiliary circuit board being provided with at least one light source structure; and
at least one light guide block provided with at least one snapping groove, the light guide block being snapped onto the auxiliary circuit board by the snapping groove, and the light guide block being provided with at least one light incident surface disposed opposite to the light source structure.

2. The atmosphere lamp according to claim 1, wherein,
the light guide block is provided with at least one claw and at least one first bump, the first bump and the light incident surface are located on the same side of the light guide block, and the claw and the first bump are cooperated to form the snapping groove.

3. The atmosphere lamp according to claim 2, wherein,
a transverse limiting structure is disposed between the light guide block and the auxiliary circuit board to limit a relative movement between the light guide block and the auxiliary circuit board in a length direction of the snapping groove.

4. The atmosphere lamp according to claim 3, wherein,
the transverse limiting structure comprises a transverse limiting block and a transverse limiting groove, the transverse limiting block is disposed on the auxiliary circuit board and matched with the transverse limiting groove, and the light guide block comprises a plurality of the claws; and
the transverse limiting groove is formed between adjacent two of the claws; or adjacent two of the claws are connected through a connecting plate and the transverse limiting groove is formed in the connecting plate.

5. The atmosphere lamp according to claim 4, wherein,
the light guide block is an asymmetric structure with respect to a center of the transverse limiting groove, and the auxiliary circuit board is an asymmetric structure with respect to the center of the transverse limiting block.

6. The atmosphere lamp according to claim 2, wherein,
a longitudinal limiting structure is disposed between the light guide block and the auxiliary circuit board to limit the auxiliary circuit board from falling out of the snapping groove.

7. The atmosphere lamp according to claim 6, wherein,
the longitudinal limiting structure comprises a longitudinal limiting block and a longitudinal limiting groove, the claw has an inner side surface opposite to the auxiliary circuit board, the longitudinal limiting block is disposed on the inner side surface of the claw, and the longitudinal limiting groove is disposed on the auxiliary circuit board and matched with the longitudinal limiting block.

8. The atmosphere lamp according to claim 7, wherein,
the longitudinal limiting block is provided with a guide slope which is inclined towards the outside of the snapping groove along a mounting direction of the light guide block, and a limiting slope which is inclined towards the inside of the longitudinal limiting groove along a snapping direction of the longitudinal limiting block.

9. The atmosphere lamp according to claim 1, wherein,
a support structure is disposed on the light guide block, and abuts against the main circuit board along a mounting direction of the light guide block.

10. The atmosphere lamp according to claim 9, wherein,
the support structure comprises a plurality of second bumps disposed symmetrically with respect to the center of gravity of the light guide block.

11. The atmosphere lamp according to claim 1, wherein,
the auxiliary circuit board has a first end and a second end opposite to each other, the first end of the auxiliary circuit board is connected to the main circuit board and disposed vertically, and the light guide block is snapped onto the auxiliary circuit board from the second end of the auxiliary circuit board through the snapping groove.

12. The atmosphere lamp according to claim 1, wherein,
the atmosphere lamp comprises a plurality of main circuit boards, a plurality of auxiliary circuit boards and a plurality of light guide blocks, the plurality of main circuit boards are connected and conducted through a connector, the plurality of auxiliary circuit boards are mounted on the plurality of main circuit boards in one-to-one correspondence, and the plurality of light guide blocks are mounted on the plurality of auxiliary circuit boards in one-to-one correspondence.
